# EUROPEAN PATENT SPECIFICATION

(11) **EP 4 265 500 B1**
(45) Date of publication and mention of the grant of the patent: **01.01.2025**
(21) Application number: 23152016.4
(22) Date of filing: 17.01.2023
(51) Int. Cl.: B60W 60/00, G05D 1/00, G08G 1/00, B60W 30/18

(54) **DRIVING CONTROL APPARATUS FOR VEHICLE**
STEUERUNGSVORRICHTUNG FÜR EIN FAHRZEUG
APPAREIL DE COMMANDE DE CONDUITE POUR VÉHICULE

(30) Priority: 22.03.2022 JP 2022045598
(43) Date of publication of application: 25.10.2023
(73) Proprietor: Suzuki Motor Corporation, Hamamatsu-shi, Shizuoka 432-8611 (JP)
(72) Inventor: SATO, Katsuhiko, Hamamatsu-shi, Shizuoka, 432-8611 (JP)
(74) Representative: Haseltine Lake Kempner LLP

(56) References cited:
- EP-A1- 3 608 745
- US-A1- 2020 307 573
- US-A1- 2021 055 733

## Description

### [Technical Field]

The present invention relates to a driving control apparatus for a vehicle, and more particularly, relates to a risk mitigation function for a vehicle being driven automatically by remote monitoring and control.

### [Background Art]

The development of technology for driverless vehicles driving under specific conditions by an automated operation device of the remote monitoring and control type is progressing. A remote-type automated driving system is configured to monitor, at a remote-control base station, the driving of a vehicle by an automated operation device provided with an inter-vehicle distance control system (ACCS) and a continuous automated steering system, for example, and to take control of the vehicle if necessary. In such a remote-type automated driving system, in the case of conditions in which the continuation of remote monitoring and control has become difficult for some reason while a vehicle is being driven by the automated operation device, it is necessary to respond with a risk mitigation function (RMF) of the automated operation device installed in the vehicle.

For example, Patent Literature 1 discloses, in a case in which an abnormality has occurred in a vehicle during automated driving, searching for a refuge location and calculating a guide path to the refuge location, and controlling the vehicle by automated steering to travel along the guide path. A space in which the vehicle can be parked, such as vacant site or the parking lot of a commercial facility, for example, is set as a refuge location.

Patent Literature 2 discloses an information processing method of an information processing apparatus for remotely operating a vehicle via a communication network.

### [Citation List]

### [Patent Literature]

[Patent Literature 1] JP 2019-152963 A
[Patent Literature 2] EP 3 608 745

### [Summary of Invention]

### [Problem to be Solved by the Invention]

However, the case of the RMF being activated in the vicinity of an intersection carries the risk of disturbing the traffic flow or contact or collision with others in traffic while guiding the vehicle to the refuge location, such as by encountering others in traffic at the intersection.

The present invention has been devised in light of circumstances as above, and an object thereof is to lower the risk of disturbance of traffic flow or contact or collision with others in traffic at an intersection when the risk mitigation function is activated.

### [Means for Solving the Problem]

The invention is defined by the appended independent claim. Some optional features are defined by the dependent claims.

### [Advantageous Effect of Invention]

A driving control apparatus for a vehicle according to the present invention can lower the risk of disturbing traffic flow or contact or collision with others in traffic at an intersection when the risk mitigation function is activated in the vicinity of the intersection.

### [Brief Description of Drawings]

[Figure 1] Figure 1 is a schematic diagram illustrating a driving control system for a vehicle in an embodiment of the present invention.
[Figure 2] Figure 2 is a schematic plan view illustrating an external sensor group of a vehicle.
[Figure 3] Figure 3 is a block diagram illustrating a driving control system for a vehicle.
[Figure 4] Figures 4(a) and 4(b) are diagrams explaining the relationship between a stopping location of a vehicle and others in traffic around an intersection when making a right turn.
[Figure 5] Figures 5(a) and 5(b) are diagrams explaining the relationship between a stopping location of a vehicle and others in traffic around an intersection when making a left turn.
[Figure 6] Figures 6(a) and 6(b) are diagrams explaining the relationship between a stopping location of a vehicle and others in traffic around an intersection when going straight.
[Figure 7] Figures 7(a) and 7(b) are diagrams illustrating a plurality of target stopping location candidates set for RMF.
[Figure 8] Figures 8(a) and 8(b) are diagrams illustrating a plurality of target stopping location candidates set for RMF.
[Figure 9] Figure 9 is a diagram explaining the selection of a target stopping location at a T-junction.
[Figure 10] Figure 10 is a diagram explaining the selection of a target stopping location at a crossroads.
[Figure 11] Figure 11 is a flowchart explaining the flow of RMF operation.

### [Mode for Carrying Out the Invention]

Hereinafter, an embodiment of the present invention will be described in detail by referring to the drawings. A driving control system for a vehicle 1 according to the present embodiment is configured to be capable of executing automated driving corresponding to the Society of Automotive Engineers (SAE) Level 4, in which all driving operations in the operational design domain (ODD) are performed. Also, the driving control system for the vehicle 1 is a remote-type automated driving system capable of automated driving by remote monitoring and control, and taxis, rental cars, and other service cars that provide unmanned automated transportation services are anticipated as the vehicle 1.

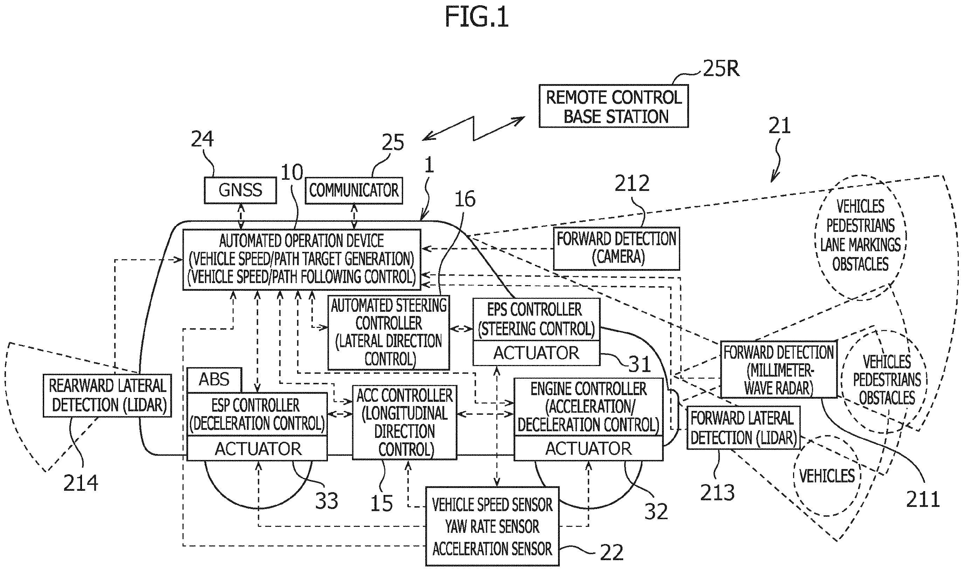

In Figures 1 to 3, the vehicle 1 provided with the driving control system according to the present embodiment is provided with, in addition to typical automobile components such as an engine and a vehicle body, an external sensor 21 that detects the vehicle-surrounding environment, an internal sensor 22 that detects vehicle information, a map information database 23, positioning means 24, a controller and actuator group for speed control and steering control, an ACC controller 15 for inter-vehicle distance control, an automated steering controller 16 for automated steering control, and an automated operation device 10 for unifying the above to execute path following control, so that recognition, determination, and control conventionally performed by the driver are performed by the vehicle. The vehicle 1 is further provided with a communicator 25 for communicating remote control commands, vehicle information and vehicle location information, and the like with a remote-control base station 25R.

The controller and actuator group for speed control and steering control includes an electronic power steering (EPS) controller 31 for steering control, an engine controller 32 for acceleration and deceleration control, and an ESP/ABS controller 33. An ESP (Electronic Stability Program, registered trademark) includes an anti-lock braking system (ABS) to form a stability control system (vehicle behavior stabilization control system).

The external sensor 21 is composed of a plurality of detection means for inputting lane markings on a road defining the vehicle's own driving lane and neighboring lanes, and the presence of, and relative distances from, other vehicles, obstacles, people, and the like around the vehicle into the automated operation device 10 as external data such as image data or point cloud data.

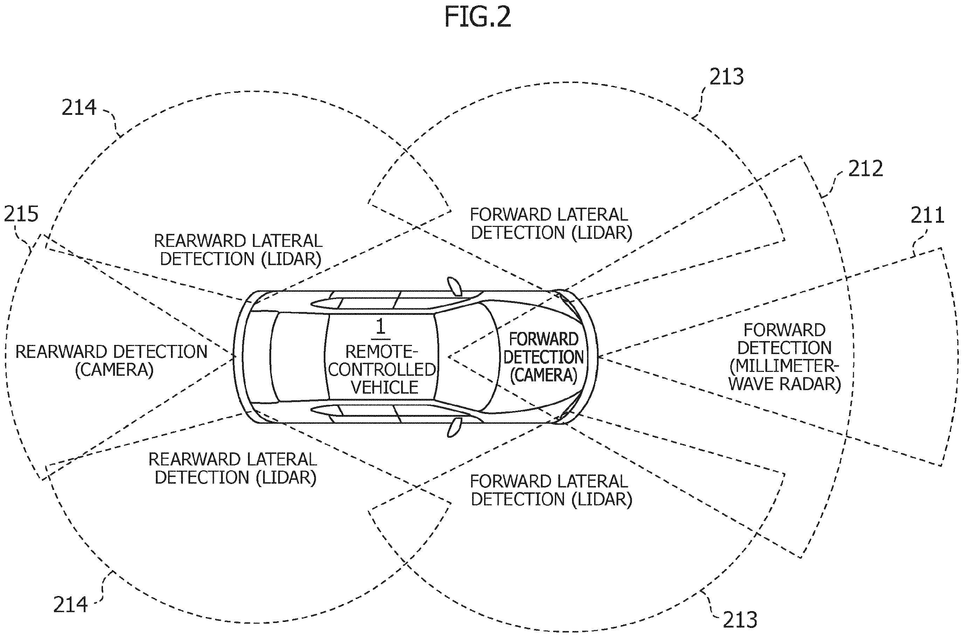

For example, as illustrated in Figure 2, the vehicle 1 is provided with a millimeter wave radar (211) and a camera (212) as front detection means 211 and 212, LIDARs (Laser Imaging Detection And Ranging) as front lateral detection means 213 and rear lateral detection means 214, and a camera (back camera) as rear detection means 215. The external sensor 21 covers 360 degrees around the vehicle, and can detect the positions of, and distances from, other vehicles, obstacles, and the like, and lane marking positions of the vehicle's own driving lane and the neighboring lanes, within a predetermined range in each of the front, rear, left, and right directions of the vehicle. Note that a millimeter wave radar (or LIDAR) can be also added as the rear detection means.

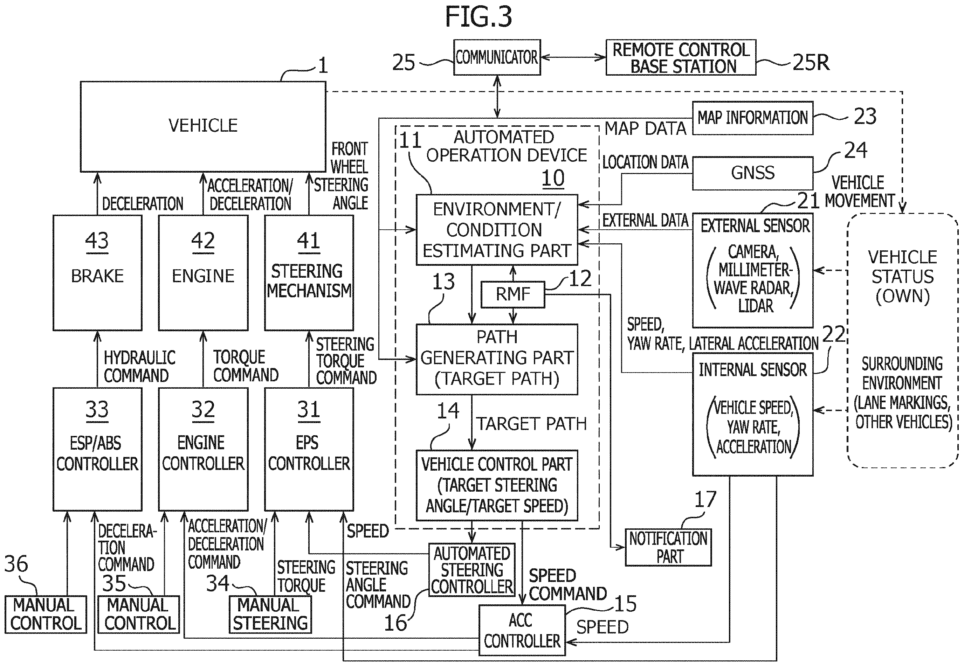

The internal sensor 22 is composed of a plurality of detection means, such as a vehicle speed sensor, a yaw rate sensor, and an acceleration sensor, for measuring physical quantities representing the state of movement of the vehicle. As illustrated in Figure 3, each of the measurement values from the internal sensor 22 is input into the automated operation device 10, the ACC controller 15, the automated steering controller 16, and the EPS controller 31, and is computationally processed together with input from the external sensor 21.

The automated operation device 10 includes the environmental condition estimating part 11, a risk mitigation function (RMF) part 12, a path generating part 13, and a vehicle control part 14, and is formed by a computer for implementing functions like those described hereinafter, that is, by ROM storing programs and data, a CPU that performs computational processing, RAM for reading out the programs and data and storing dynamic data and computational processing results, an input-output interface, and the like.

The environmental condition estimating part 11 acquires the absolute location of the vehicle by matching the vehicle location information according to the positioning means 24 such as a global navigation satellite system (GNSS) with map information in the map information database 23, and on the basis of external data such as image data and point cloud data acquired by the external sensor 21, estimates the positions of lane markings of the vehicle's own driving lane and the neighboring lanes, and the positions and speeds of other vehicles. In addition, it acquires the state of movement of the vehicle from internal data measured by the internal sensor 22.

In the case in which road conditions and environmental conditions are outside the operational design domain (ODD), or in the case in which the system does not operate normally, the RMF part 12 determines, on the basis of information input from the environmental condition estimating part 11, whether to activate the risk mitigation function (RMF) for safely stopping the vehicle 1 inside a stopping area designated as a target. In the present embodiment, the RMF is configured to be activated in the case of conditions in which the continuation of remote monitoring and control of the driving control system by the remote-control base station 25R through the communicator 25 has become difficult.

Before the RMF is activated and while the RMF is active, a notification is issued to passengers or occupants of the vehicle 1 and road users outside the vehicle by a notification part 17. Also, in the case in which the direction of travel of the vehicle 1 changes due to the activation of the RMF as described later, a notification indicating that the direction of travel will change may also be issued by the notification part 17. Note that the notification part 17 may also be configured to notify the inside and outside of the vehicle that automated driving by remote monitoring and control has stopped. Methods of notification by the notification part 17 include visual methods such as turning on a lamp and displaying text, and/or auditory methods such as outputting sound or speech.

The path generating part 13 is configured to generate a target path to a final destination from the vehicle location estimated by the environmental condition estimating part 11. The path generating part 13 performs a route search from a place of departure to a destination on the basis of vehicle location information and map information, and generates a general target path, also referred to as a global path. Furthermore, the path generating part 13 generates a detailed target path for automated driving such as lane keeping driving, lane changing, and travel path changing, also referred to as a local path, on the basis of the lane marking positions of the neighboring lanes, the positions and speeds of other vehicles, and the state of movement of the vehicle estimated by the environmental condition estimating part 11. The path generating part 13 may be further configured to also generate a target path for RMF activation to a target stopping location in cases in which the vehicle 1 is to be stopped by the activation of the RMF.

The vehicle control part 14 calculates a target vehicle speed and a target steering angle on the basis of the target path generated by the path generating part 13, transmits a speed command for constant-speed driving or inter-vehicle distance maintenance or following driving to the ACC controller 15, and transmits a steering angle command for path following to the EPS controller 31 via the automated steering controller 16.

Note that the vehicle speed is also input into the EPS controller 31 and the ACC controller 15. Since the steering reaction force varies depending on the vehicle speed, the EPS controller 31 references a steering angle-steering torque map according to vehicle speed and transmits a torque command to a steering mechanism 41. By controlling an engine 42, a brake 43, and the steering mechanism 41 with the engine controller 32, the ESP/ABS controller 33, and the EPS controller 31, the movement of the vehicle in the longitudinal direction and the lateral direction is controlled.

### Overview of remote-type automated driving system

Next, an overview of the remote-type automated driving system will be described. The automated driving system in the present embodiment is an automated driving system of the remote monitoring and control method, in which the driving of the vehicle 1 by the automated driving system is monitored by the remote-control base station 25R and controlled from the remote-control base station 25R if necessary.

The automated driving system is a system combining an inter-vehicle distance control system (ACCS: Adaptive Cruise Control System) and continuous automated steering system that continuously and automatically performs lane keeping and lane changing. The automated driving system is executable in a state in which the automated operation device 10 is active together with the ACC controller 15 forming the inter-vehicle distance control system (ACCS) and the automated steering controller 16 forming the continuous automated steering system.

Before the departure of the vehicle 1, an operator of the remote-control base station 25R sets a place of departure and a destination. The set place of departure and destination are input from the remote-control base station 25R into the automated operation device 10 of the vehicle 1 through the communicator 25. The path generating part 13 generates a global path from the place of departure to the destination on the basis of vehicle location information and map information obtained from the environmental condition estimating part 11. The path generating part 13 generates a local path and a target vehicle speed on the basis of external information (lanes, vehicle location, the positions and speeds of other vehicles traveling in the vehicle's own driving lane and the neighboring lanes, and the presence or absence of pedestrians and bicycles) acquired by the external sensor 21 on the basis of the generated global path and internal information (vehicle speed, yaw rate, acceleration) acquired by the internal sensor 22.

The operator of the remote-control base station 25R, upon determining that the environmental conditions, road conditions, and the like are maintained within the operational design domain (ODD), transmits a departure command to the automated operation device 10 causing the vehicle 1 to be driven in accordance with the generated target path and target vehicle speed.

The vehicle control part 14 estimates the speed, posture and lateral displacement of the vehicle Δt seconds later from the vehicle location and the movement characteristics of the vehicle, that is, the relationship between the yaw rate γ and the lateral acceleration (d²y/dt²) produced by vehicle movement according to the front wheel steering angle δ produced when steering torque T is imparted to the steering mechanism 41 while driving at the vehicle speed V. The vehicle control part 14 issues a steering angle command to the EPS controller 31 via the automated steering controller 16 such that the lateral displacement will be yt Δt seconds later, and issues a speed command to the ACC controller 15 such that a speed Vt will be obtained Δt seconds later.

The ACC controller 15, the automated steering controller 16, the EPS controller 31, the engine controller 32, and the ESP/ABS controller 33 operate independently and irrespectively of the automated steering, but are also operable according to command inputs from the automated driving controller 10 while the automated driving system is active.

The ESP/ABS controller 33 that has received a deceleration command from the ACC controller 15 controls the vehicle speed by outputting a hydraulic command to the actuator and controlling the braking force of the brake 43. Also, the engine controller 32 that has received an acceleration or deceleration command from the ACC controller 15 controls the vehicle speed by controlling the actuator output (throttle position) to thereby issue a torque command to the engine 42 and control the driving force.

The ACC system (ACCS) functions as a combination of hardware and software, such as a millimeter-wave radar serving as a front detection means 211 forming the external sensor 21, the ACC controller 15, the engine controller 32, and the ESP/ABS controller 33.

That is, in the case in which no vehicle is present ahead, constant-speed driving is performed with the ACC set speed (set speed) treated as the target vehicle speed. In the case of catching up to a vehicle ahead (the case in which the speed of the vehicle ahead is the ACC set speed or less), the vehicle follows the vehicle ahead to match the speed of the vehicle ahead while maintaining an inter-vehicle distance (set inter-vehicle distance) according to a set time gap (time headway = inter-vehicle distance/speed of the vehicle).

In the continuous automated steering system, the lane markings, vehicle location, and the positions and speeds of other vehicles traveling in the neighboring lanes are detected by the environmental condition estimating part 11 of the automated operation device 10 on the basis of image data and point cloud data acquired by the external sensor 21 and vehicle information acquired by the internal sensor 22. On the basis of this information, the continuous automated steering system performs a steering control by the EPS controller 31 through the automated steering controller 16 such that lane keeping control for driving in the center of a lane and lane changing control for crossing lane markings are executed.

That is, the EPS controller 31 that has received a steering angle command from the automated steering controller 16 references a map of vehicle speed-steering angle-steering torque to output a torque command to the actuator (EPS motor), and the steering mechanism 41 issues a front wheel steering angle designated as a target.

As described above, the automated driving system is a system configured by combining longitudinal control (speed control, inter-vehicle distance control) by the ACC controller 15 with lateral control (lane keeping control, lane changing control) by the automated steering controller 16. The automated driving system of the remote type monitors the driving of the vehicle 1 with the remote-control base station 25R and controls the driving of the vehicle 1 according to remote control commands from the remote-control base station 25R.

### Risk mitigation function (RMF) of automated driving system

While the automated driving system is active, the environmental condition estimating part 11 continuously monitors whether the driving status of the vehicle, the surrounding environmental conditions, and the like are maintained within the operational design domain (ODD) of the system, on the basis of external information acquired through the external sensor 21, vehicle information acquired by the internal sensor 22, communication conditions with the remote-control base station 25R, and the like. In the case of being outside the ODD or the case in which the system does not operate normally, activation of the RMF for safely stopping the vehicle 1 inside a target stopping area is demanded.

In cases in which remote monitoring and control of the vehicle 1 by the remote-control base station 25R has become difficult, such as when communication with the remote-control base station 25R is disconnected or when the communicator 25 malfunctions, the RMF part 12 determines to activate the RMF on the basis of a signal from the environmental condition estimating part 11, and activates the RMF for guiding the vehicle 1 to stop in a target stopping area. Ordinarily, a space in which the vehicle 1 can stop on the target path of the automated driving is set as the target stopping area of the RMF. However, in the case in which the RMF is activated in the vicinity of an intersection, there is a possibility of encountering others in traffic (other traffic participants) or disturbing the traffic flow at the intersection while decelerating and guiding the vehicle 1 to the target stopping area on the target path.

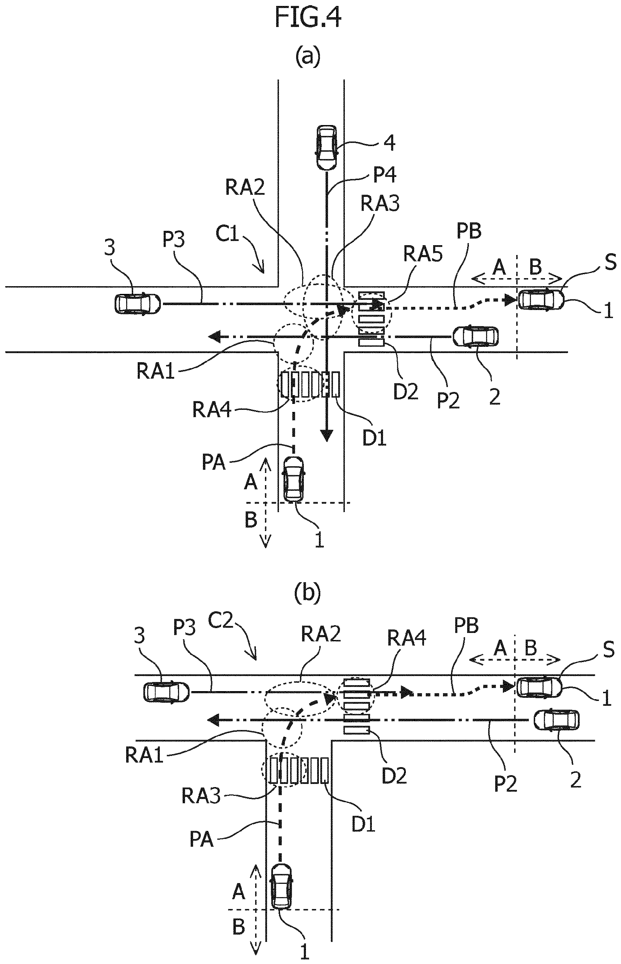

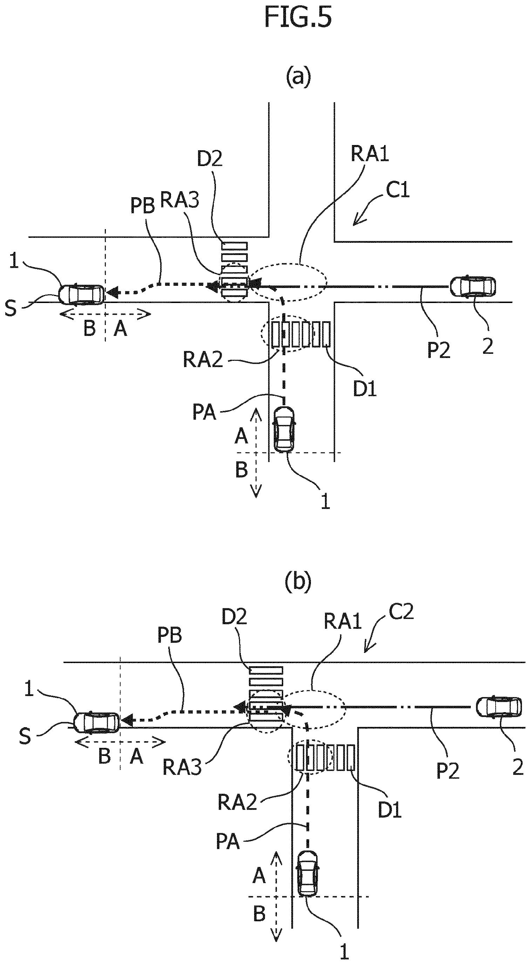

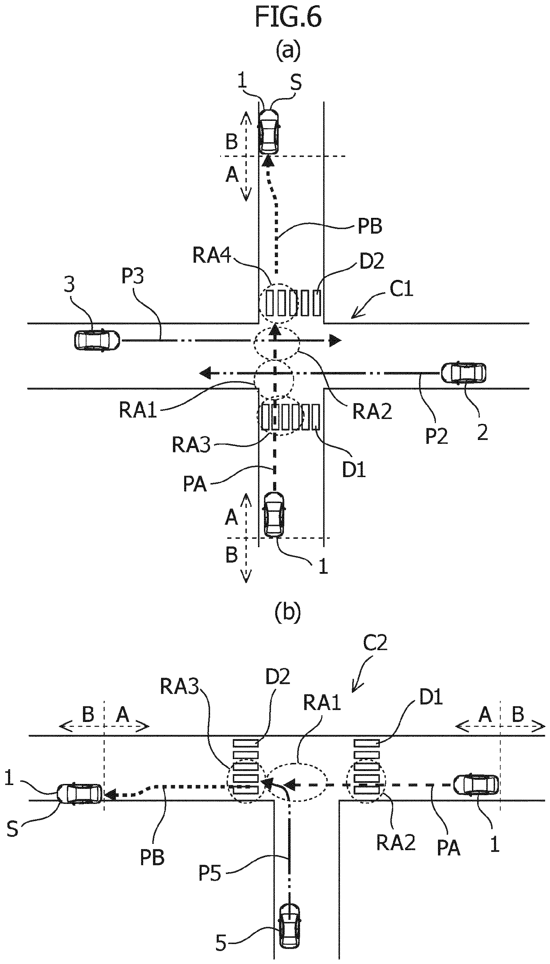

Reference will be made to Figures 4 to 6 to explain the relationship between a stopping location of the vehicle and other traffic participants around an intersection. Figures 4(a) and 4(b) illustrate examples of making a right turn at an intersection, Figures 5(a) and 5(b) illustrate examples of making a left turn at an intersection, and Figures 6(a) and 6(b) illustrate examples of going straight through an intersection.

Figures 4(a) and 4(b) illustrate examples in which the RMF is activated in the vicinity of an intersection with no traffic signal. Note that traffic rules include left-hand traffic and right-hand traffic, but in the following description, left-hand traffic is described as an example.

In the example of a crossroads illustrated in Figure 4(a), the target path of the vehicle 1 is set to a path that makes a right turn at an intersection C1, as indicated by an arrow PA. Around the intersection C1, in addition to the vehicle 1, there may be present a straight-through vehicle 2 on the right that enters the intersection C1 on a path of travel P2 from the right, a straight-through vehicle 3 on the left that enters the intersection C1 on a path of travel P3 from the left, and an oncoming straight-through vehicle 4 that enters the intersection C1 from the oncoming lane on a path of travel P4. Pedestrian crossings are provided in front and on the right-turn side of the intersection C1 as seen from the vehicle 1. In this case, there may be present a pedestrian attempting to cross the pedestrian crossing D1 in front of the intersection C1 and a pedestrian attempting to cross the pedestrian crossing D2 on the right-turn side.

Here, in the case in which the continuation of communication between the vehicle 1 and the remote-control base station 25R has become difficult in the vicinity of the intersection C1, the RMF part 12 determines that activation of the RMF is necessary.

In the case in which a target stopping location S is set on the target path after making a right turn at the intersection C 1, the vehicle 1, according to RMF activation of the automated operation device 10, makes a right turn along the path PA and is then guided along the path for RMF indicated by an arrow PB to stop at the target stopping location S. In this case, when making the right turn at the intersection C1, there are a risk for the vehicle 1 of encountering the straight-through vehicle 2 on the right in a risk area RA1, a risk of encountering the straight-through vehicle 3 on the left in a risk area RA2, and additionally a risk of encountering the oncoming straight-through vehicle 4 in a risk area RA3. Also, there are a risk of encountering the pedestrian crossing the pedestrian crossing D1 in a risk area RA4 and a risk of encountering the pedestrian crossing the pedestrian crossing D2 in a risk area RA5 for the vehicle 1.

In this way, in the case in which the RMF is activated in the vicinity of the intersection C1, a plurality of encounter points at which there is a possibility of encountering other traffic participants are generated. In the case of making a right turn at the intersection C1, as illustrated in Figure 4(a), risks such as contact or collision with other traffic participants occur in the plurality of risk areas RA1 to RA5. That is, risk areas occur in up to five places on the basis of the road structure of the intersection C1.

In the example of a T-junction illustrated in Figure 4(b), the target path of the vehicle 1 is set to a path that makes a right turn at an intersection C2, as indicated by an arrow PA. Around the intersection C2, in addition to the vehicle 1, there may be present a straight-through vehicle 2 on the right that enters the intersection C2 on a path of travel P2 from the right and a straight-through vehicle 3 on the left that enters the intersection C2 on a path of travel P3 from the left. Also, pedestrian crossings are provided in front and on the right-turn side of the intersection C2 as seen from the vehicle 1, and there may be present a pedestrian attempting to cross the pedestrian crossing D1 in front of the intersection C2 and a pedestrian attempting to cross the pedestrian crossing D2 on the right-turn side.

Here, in the case in which the continuation of communication between the vehicle 1 and the remote-control base station 25R has become difficult in the vicinity of the intersection C2, the RMF part 12 determines that activation of the RMF is necessary.

In the case in which a target stopping area S is set on the target path after making a right turn at the intersection C2, the vehicle 1, according to RMF activation of the automated operation device 10, makes a right turn along the path PA and is then guided along the path for RMF indicated by an arrow PB to stop at the target stopping location S. In this case, when making the right turn at the intersection C2, there are a risk of encountering the straight-through vehicle 2 on the right in a risk area RA1 and a risk of encountering the straight-through vehicle 3 on the left in a risk area RA2 for the vehicle 1. Also, there are a risk of encountering the pedestrian crossing the pedestrian crossing D1 in a risk area RA3 and a risk of encountering the pedestrian crossing the pedestrian crossing D2 in a risk area RA4 for the vehicle 1.

In this way, in the case in which the RMF is activated in the vicinity of the intersection C2, a plurality of encounter points at which there is a possibility of encountering other traffic participants are generated. As illustrated in Figure 4(b), in the case of making a right turn at the intersection C2, risks such as contact or collision with other traffic participants occur in the plurality of risk areas RA1 to RA4. That is, risk areas occur in up to four places on the basis of the road structure of the intersection C2.

Figures 5(a) and 5(b) illustrate examples in which the RMF is activated in the vicinity of an intersection with no traffic signal. In the case of a crossroads illustrated in Figure 5(a), the target path of the vehicle 1 is set to a path that makes a left turn at an intersection C1, as indicated by an arrow PA. Around the intersection C1, in addition to the vehicle 1, there may be present a straight-through vehicle 2 on the right. Pedestrian crossings are provided in front and on the left-turn side of the intersection C1 as seen from the vehicle 1, and there may be present a pedestrian attempting to cross the pedestrian crossing D1 in front of the intersection C1 and a pedestrian attempting to cross the pedestrian crossing D2 on the left-turn side.

Here, in the case in which the continuation of communication between the vehicle 1 and the remote-control base station 25R has become difficult in the vicinity of the intersection C1, the RMF part 12 determines that activation of the RMF is necessary.

In the case in which a target stopping location S is set on the target path after making a left turn at the intersection C1, the vehicle 1, according to RMF activation of the automated operation device 10, makes a left turn along the path PA and is then guided along the path for RMF indicated by an arrow PB to stop at the target stopping location S. In this case, when making the left turn at the intersection C1, there is a risk of encountering the straight-through vehicle 2 on the right in a risk area RA1 for the vehicle 1. Also, there are a risk of encountering the pedestrian crossing the pedestrian crossing D1 in a risk area RA2 and a risk of encountering the pedestrian crossing the pedestrian crossing D2 in a risk area RA3 for the vehicle 1.

In this way, in the case in which the RMF is activated in the vicinity of the intersection C1, a plurality of encounter points at which there is a possibility of encountering other traffic participants are generated. In the case of making a left turn at the intersection C1, as illustrated in Figure 5(a), risks such as contact or collision with other traffic participants occur in the plurality of risk areas RA1 to RA3. That is, risk areas occur in up to three places on the basis of the road structure of the intersection C1.

In the example of a T-junction illustrated in Figure 5(b), the target path of the vehicle 1 is set to a path that makes a left turn at an intersection C2, as indicated by an arrow PA. Around the intersection C2, in addition to the vehicle 1, there may be present a straight-through vehicle 2 on the right. Also, pedestrian crossings are provided in front and on the left-turn side of the intersection C2 as seen from the vehicle 1, and there may be present a pedestrian attempting to cross the pedestrian crossing D1 in front of the intersection C2 and a pedestrian attempting to cross the pedestrian crossing D2 on the left-turn side.

Here, in the case in which the continuation of communication between the vehicle 1 and the remote-control base station 25R has become difficult in the vicinity of the intersection C2, the RMF part 12 determines that activation of the RMF is necessary.

In the case in which a target stopping area S is set on the target path after making a left turn at the intersection C2, the vehicle 1, according to RMF activation of the automated operation device 10, makes a left turn along the path PA and is then guided along the path for RMF indicated by an arrow PB to stop at the target stopping location S. In this case, when making the left turn at the intersection C2, there are a risk of encountering the straight-through vehicle 2 on the right in a risk area RA1, a risk of encountering the pedestrian crossing the pedestrian crossing D1 in a risk area RA2, and a risk of encountering the pedestrian crossing the pedestrian crossing D2 in a risk area RA3 for the vehicle 1.

In this way, in the case in which the RMF is activated in the vicinity of the intersection C2, a plurality of encounter points at which there is a possibility of encountering other traffic participants are generated. As illustrated in Figure 5(b), in the case of making a left turn at the intersection C2, risks such as contact or collision with other traffic participants occur in the plurality of risk areas RA1 to RA3. That is, risk areas occur in up to three places on the basis of the road structure of the intersection C2.

Figures 6(a) and 6(b) illustrate examples in which the RMF is activated in the vicinity of an intersection with no traffic signal. In the example of a crossroads illustrated in Figure 6(a), the target path of the vehicle 1 is set to a path that goes straight through an intersection C1, as indicated by an arrow PA. Around the intersection C1, in addition to the vehicle 1, there may be present a straight-through vehicle 2 on the right and a straight-through vehicle 3 on the left. Pedestrian crossings are provided in front of the intersection C1 and on the far side of the intersection C1 as seen from the vehicle 1, and there may be present a pedestrian attempting to cross the pedestrian crossing D1 in front of the intersection C1 and a pedestrian attempting to cross the pedestrian crossing D2 on the far side of the intersection C1.

Here, in the case in which the continuation of communication between the vehicle 1 and the remote-control base station 25R has become difficult in the vicinity of the intersection C1, the RMF part 12 determines that activation of the RMF is necessary.

In the case in which a target stopping location S is set on the target path after going straight through the intersection C1, the vehicle 1, according to RMF activation of the automated operation device 10, goes straight along the path PA and is then guided along the path for RMF indicated by an arrow PB to stop at the target stopping location S. In this case, when going straight through the intersection C1, there are a risk of encountering the straight-through vehicle 2 on the right in a risk area RA1 and a risk of encountering the straight-through vehicle 3 on the left in a risk area RA2 for the vehicle 1. Also, there are a risk of encountering the pedestrian crossing the pedestrian crossing D1 in a risk area RA3 and a risk of encountering the pedestrian crossing the pedestrian crossing D2 in a risk area RA4 for the vehicle 1.

In this way, in the case in which the RMF is activated in the vicinity of the intersection C1, a plurality of encounter points at which there is a possibility of encountering other traffic participants are generated. In the case of going straight through the intersection C1, as illustrated in Figure 6(a), risks such as contact or collision with other traffic participants occur in the plurality of risk areas RA1 to RA4. That is, risk areas occur in up to four places on the basis of the road structure of the intersection C1.

In the case of a T-junction illustrated in Figure 6(b), the target path of the vehicle 1 is set to a path that goes straight through an intersection C2, as indicated by an arrow PA. Around the intersection C2, in addition to the vehicle 1, there may be present a left or right-turning vehicle 5 entering the intersection C2 on a path P5 for making a right turn or a left turn. Also, pedestrian crossings are provided in front of the intersection C2 and on the far side of the intersection C2 as seen from the vehicle 1, and there may be present a pedestrian attempting to cross the pedestrian crossing D1 in front of the intersection C2 and a pedestrian attempting to cross the pedestrian crossing D2 on the far side of the intersection C2.

Here, in the case in which the continuation of communication between the vehicle 1 and the remote-control base station 25R has become difficult in the vicinity of the intersection C2, the RMF part 12 determines that activation of the RMF is necessary.

In the case in which a target stopping area S is set on the target path after going straight through the intersection C2, the vehicle 1, according to RMF activation of the automated operation device 10, goes straight along the path PA and is then guided along the path for RMF indicated by an arrow PB to stop at the target stopping location S. In this case, when going straight through the intersection C2, there is a risk of encountering the left or right-turning vehicle 5 in a risk area RA1 for the vehicle 1. Also, there are a risk of encountering the pedestrian crossing the pedestrian crossing D1 in a risk area RA2 and a risk of encountering the pedestrian crossing the pedestrian crossing D2 in a risk area RA3.

In this way, in the case in which the RMF is activated in the vicinity of the intersection C2, a plurality of encounter points at which there is a possibility of encountering other traffic participants are generated. As illustrated in Figure 6(b), in the case of going straight through the intersection C2, risks such as contact or collision with other traffic participants occur in the plurality of risk areas RA1 to RA3. That is, risk areas occur in up to three places on the basis of the road structure of the intersection C2.

In this way, in the case in which the RMF is activated in the vicinity of an intersection, when the vehicle 1 enters and passes through the intersection, encounter points with the straight-through vehicle 2 on the right, the straight-through vehicle 3 on the left, the oncoming straight-through vehicle 4, and the left/right-turning vehicle 5 occur. Also, at an intersection with no traffic signal in particular, encounter points with pedestrians crossing a pedestrian crossing in front of the intersection or after passing through the intersection occur. At such encounter points, risks such as contact or collision between the vehicle 1 and other traffic participants occur. Also, if the stopping location of the vehicle 1 according to the RMF is set immediately before or immediately after the intersection, there is a possibility of disturbing the traffic flow of other traffic participants.

Accordingly, in the present embodiment, in the case in which the RMF is activated in the vicinity of an intersection, the target stopping location for RMF is set to an area with which risks such as contact or collision or the like between the vehicle 1 and other traffic participants can be reduced, and furthermore, the influence on the traffic flow of other traffic participants can be moderated.

Here, the case in which the RMF is activated in the vicinity of an intersection means a situation in which, for example, if the RMF is activated to decelerate and stop the vehicle 1, the vehicle 1 is made to stop at or near the intersection, and as a result, the risk of disturbing the traffic flow or contact or collision with other traffic participants at the intersection or the like may occur. For example, the case of being in a stage (a point in space or a point in time) at which the vehicle 1 cannot be brought to a stop in front of a no-stop area near an intersection described later, even if decelerated by a prescribed deceleration by the activation of the RMF, the RMF is determined to be activated in the vicinity of the intersection. That is, the vicinity of an intersection can be defined to be a predetermined area in front of an intersection in which, if the RMF is activated to decelerate the vehicle by a prescribed deceleration (for example, 4.0 m/s²), the vehicle 1 would come to a stop inside a no-stop area.

Note that even if in the so-called "vicinity of an intersection", the case in which the vehicle 1 is already traveling in a dedicated left or right-turn lane to follow a target path of automated driving, the case in which automated steering by automated driving is occurring, and the like may also be excluded from the activation of the RMF in the vicinity of an intersection described below. This is because changing the path for RMF in the situation in which preparations for making a left or right turn are already being made may inadvertently increase risk.

Hereinafter, the setting of the target stopping location for RMF in the present embodiment will be described.

### Setting of target stopping location for RMF

In the present embodiment, the target stopping location for RMF is set according to the following basic principles.

### (1) Reduce encounter points with other traffic participants

Encounter points with other traffic participants are reduced by setting a plurality of target stopping location candidates.

### (2) Reduce influence on traffic flow of other traffic participants

The influence on traffic flow of other traffic participants is reduced by setting a no-stop area in a prescribed area near an intersection and including the intersection.

### (3) Determine target stopping location through comparison of risk factors

The target stopping location is determined by comparing risk factors of the plurality of target stopping location candidates.

Hereinafter, the setting of the target stopping location for RMF will be described in detail.

### (1) Reduce encounter points with other traffic participants

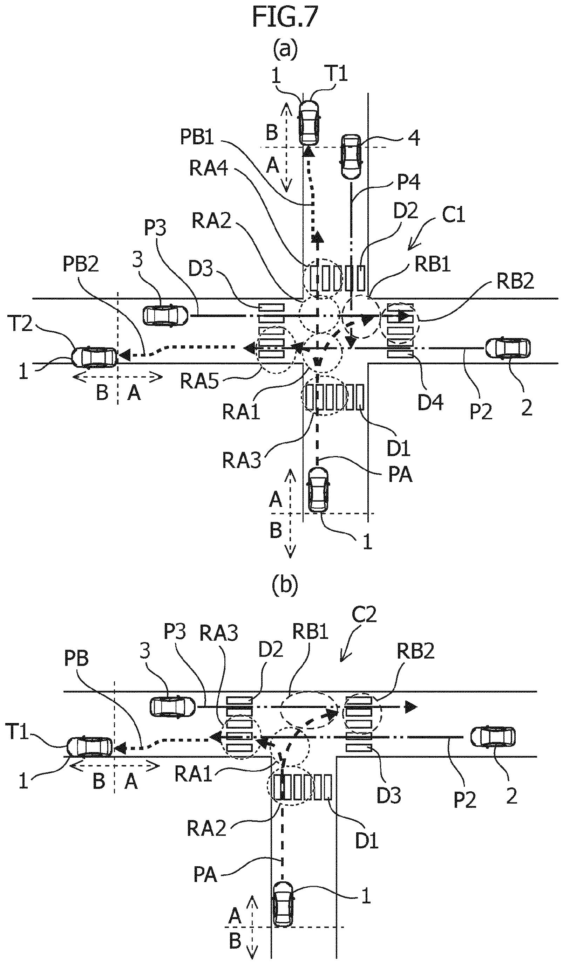

First, Figures 7(a) and 7(b) will be used to describe the setting of a plurality of target stopping location candidates in consideration of reducing encounter points with other traffic participants. The automated operation device 10 is configured to acquire the vehicle location with the environmental condition estimating part 11 by matching vehicle location information from the positioning means 24 with map information in the map information database 23, and to search for a plurality of target stopping location candidates with the RMF part 12 in the case of RMF activation on the basis of the vehicle location and map information about the surroundings, continuously during automated driving. As for the target stopping location candidates for RMF, locations on paths different from the global path set by the automated operation device 10 may be set in consideration of reducing encounter points with other traffic participants.

Figure 7(a) illustrates an example of an intersection C1 which is a crossroads with no traffic signal. As illustrated in Figure 7(a), around the intersection C1, in addition to the vehicle 1 in front of the intersection C1, there may be present a straight-through vehicle 2 on the right, a straight-through vehicle 3 on the left, and an oncoming straight-through vehicle 4. Also, there may be present a pedestrian attempting to cross a pedestrian crossing D1 in front of the intersection C1, a pedestrian attempting to cross a pedestrian crossing D2 on the far side of the intersection C1, a pedestrian attempting to cross a pedestrian crossing D3 on the left-turn side, and a pedestrian attempting to cross a pedestrian crossing D4 on the right-turn side.

In the case in which the RMF is activated in the vicinity of the intersection C1, the direction of travel of a target path may be the straight-through direction, the left-turn direction, or the right-turn direction of the intersection C1. Accordingly, in the example illustrated in Figure 7(a), the RMF part 12 sets a target stopping location candidate T1 on a path going straight through the intersection C1 and a target stopping location candidate T2 on a path making a left turn at the intersection C1. The target stopping location candidates T1 and T2 are each set in an area such as the left side of the vehicle's own driving lane or the road shoulder. In the case in which the RMF is activated, the vehicle 1 is guided automatically on the path according to the RMF indicated by arrows PB1 or PB2 and brought to a stop at the location T1 or the location T2.

In this way, the RMF part 12 sets the target stopping location candidates T1 and T2 in areas that can be reached by only a path going straight through the intersection C1 or a path making a left turn, and a target stopping location candidate is not set on a path making a right turn at the intersection C1. Even if the target stopping location candidate T1 or T2 is set on a path going straight through or making a left turn at the intersection C1, as illustrated in Figure 7(a), a risk area RA1 of encountering the straight-through vehicle 2 on the right, a risk area RA2 of encountering the straight-through vehicle 3 on the left, and risk areas RA3 to RA5 of encountering the pedestrians remain, but by excluding a path making a right turn at the intersection C1, a risk area RB1 of encountering the straight-through vehicle 3 on the left and the oncoming straight-through vehicle 4 and a risk area RB2 of encountering the pedestrian can be cleared.

Figure 7(b) illustrates an example of an intersection C2 which is a T-junction with no traffic signal. As illustrated in Figure 7(b), around the intersection C2, in addition to the vehicle 1 in front of the intersection C2, there may be present a straight-through vehicle 2 on the right and a straight-through vehicle 3 on the left. Also, there may be present a pedestrian attempting to cross a pedestrian crossing D1 in front of the intersection C2, a pedestrian attempting to cross a pedestrian crossing D2 on the left-turn side, and a pedestrian attempting to cross a pedestrian crossing D3 on the right-turn side.

In the case in which the RMF is activated in the vicinity of the intersection C2, the direction of travel of a target path PA may be the left-turn direction or the right-turn direction of the intersection C2. Accordingly, in the example illustrated in Figure 7(b), the RMF part 12 sets a target stopping location candidate T1 on a path making a left turn at the intersection C2. The target stopping location candidate T1 is set in an area such as the left side of the vehicle's own driving lane or the road shoulder. In the case in which the RMF is activated, the vehicle 1 is guided automatically on the path according to the RMF indicated by an arrow PB and brought to a stop at the location T1.

In this way, the RMF part 12 sets the target stopping location candidate T1 in an area that can be reached by only a path making a left turn at the intersection C2, and a target stopping location candidate is not set on a path making a right turn at the intersection C2. Even if the target stopping location candidate T1 is set on a path making a left turn at the intersection C2, as illustrated in Figure 7(b), a risk area RA1 of an encounter with the straight-through vehicle 2 on the right and risk areas RA2 and RA3 of encounters with the pedestrians remain. However, by excluding a path making a right turn at the intersection C2, a risk area RB1 of an encounter with the straight-through vehicle 3 on the left and a risk area RB2 of an encounter with the pedestrian can be cleared.

### (2) Reduce influence on traffic flow of other traffic participants

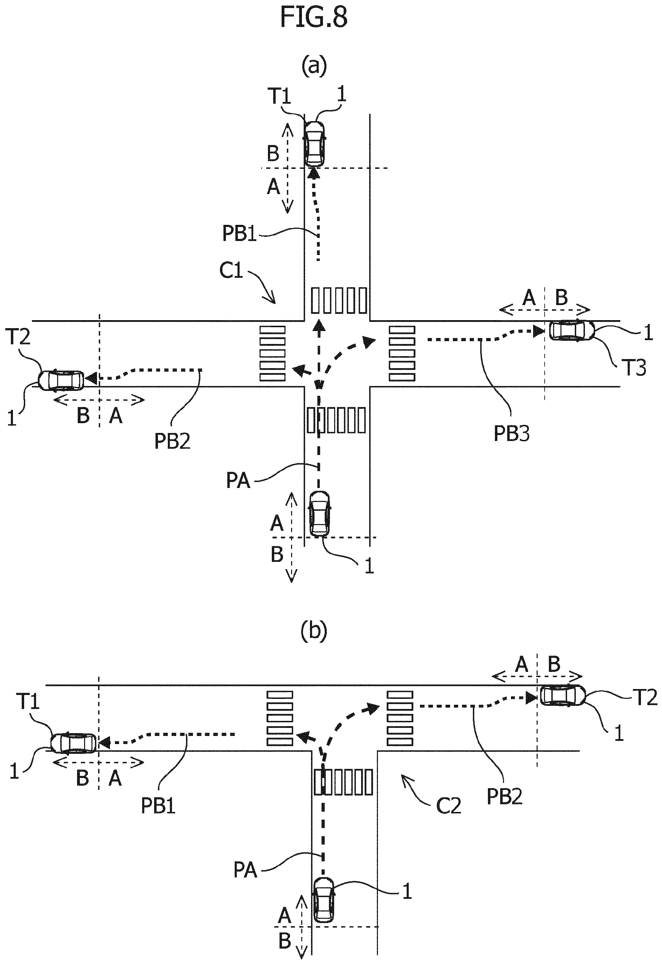

Next, reference will be made to Figures 8(a) and 8(b) to describe the setting of a plurality of target stopping location candidates in consideration of the influence on the traffic flow of other traffic participants.

Figure 8(a) illustrates an example of an intersection C1 which is a crossroads with no traffic signal. As illustrated in Figure 8(a), the vehicle 1 is present in front of the intersection C1. Pedestrian crossings are provided in front of the intersection C1 and on the far side, the left-turn side, and the right-turn side of the intersection C1. In the case in which the RMF is activated in the vicinity of the intersection C1, the direction of travel of a target path PA may be the straight-through direction, the left-turn direction, or the right-turn direction of the intersection C1.

At and near the intersection C1, a no-stop zone (no-stop area) A to be excluded from the search for target stopping location candidates is provided. If the vehicle 1 is brought to a stop in, immediately before, or immediately after the intersection C1 by RMF activation, there is a possibility of impeding the traffic flow of other traffic participants. Accordingly, by providing the no-stop zone A, the influence on the traffic flow of other traffic participants is reduced. Since target stopping location candidates are not set in a no-stop zone A, the no-stop zone A may also be seen as a range to be excluded from the setting of the target stopping location.

An appropriate range is set for the no-stop zone A such that the influence on the traffic flow of other traffic participants at the intersection C1 is reduced. For example, an area on the inner side of the intersection edges, an area inside the stop lines for an intersection with stop lines, an area within a certain distance (for example, 6 meters) from the intersection edges for an intersection with no stop lines or pedestrian crossings, an area inside pedestrian crossings for an intersection with no stop lines but with pedestrian crossings, or a noparking/stopping zone can be set as the no-stop zone A at the intersection and near the intersection.

Note that a no-travel direction to be excluded from the search for target stopping location candidates is not set ahead in the direction of travel. That is, at a crossroads intersection, it is also possible to set a target stopping location for RMF in the right-turn direction, that is, a direction of travel in which the vehicle 1 needs to cut across the oncoming lane.

Figure 8(a) illustrates an example in which an area within a certain distance from the intersection edges is set as a no-stop zone A. In this case, the RMF part 12 sets a target stopping location candidate T1 in a stoppable zone B past the no-stop zone A on a path going straight through the intersection C1, sets a target stopping location candidate T2 in a stoppable zone B past the no-stop zone A on a path making a left turn at the intersection C1, and sets a target stopping location candidate T3 in a stoppable zone B past the no-stop zone A on a path making a right turn at the intersection C1. The target stopping location candidates T1 to T3 are each set in an area such as the left side of the vehicle's own driving lane or the road shoulder. In the case in which the RMF is activated, the vehicle 1 is guided automatically on the path according to the RMF indicated by an arrow PB1, PB2, or PB3 and brought to a stop at the location T1, the location T2, or the location T3.

Figure 8(b) illustrates an example in which an area within a certain distance from the intersection edges is set as a no-stop zone A in the example of an intersection C2 which is a T-junction with no traffic signal. As illustrated in Figure 14(b), the vehicle 1 is present in front of the intersection C2, and pedestrian crossings are provided in front of the intersection C2 and on the left-turn side and the right-turn side. In the case in which the RMF is activated in the vicinity of the intersection C2, the direction of travel of a target path PA may be the left-turn direction or the right-turn direction of the intersection C2.

In this case, the RMF part 12 sets a target stopping location candidate T1 in a stoppable zone B past the no-stop zone A on a path making a left turn at the intersection C2 and sets a target stopping location candidate T2 in a stoppable zone B past the no-stop zone A on a path making a right turn at the intersection C2. The target stopping location candidates T1 and T2 are set in an area such as the left side of the vehicle's own driving lane or the road shoulder. In the case in which the RMF is activated, the vehicle 1 is guided automatically on the path according to the RMF indicated by an arrow PB 1 or PB2 and is brought to a stop at the location T1 or the location T2.

### (3) Determine target stopping location through comparison of risk factors

Next, the determination of the target stopping location through a comparison of risk factors of the plurality of target stopping location candidates will be described.

The RMF part 12 sets a plurality of target stopping location candidates with consideration for reducing encounter points and reducing influence on traffic flow, as described in (1) and (2) above. For each of the plurality of target stopping location candidates that have been set, the RMF part 12 calculates a risk factor RF expressing how high a risk there is for the vehicle 1 to reach the target stopping location candidate from the current location. The risk factor RF is a larger value for a higher risk.

Specifically, the risk factor RF is calculated as the total (Rf1 + Rf2 + Rf3) of points Rf1 related to the number of encounter points between the vehicle 1 and other traffic participants at and near the intersection, points Rf2 related to a predicted travel distance from the current location of the vehicle 1 to each target stopping location candidate, and points Rf3 related to a predicted travel time from the current location of the vehicle 1 to each target stopping location candidate.

The points Rf1 related to the number of encounter points are calculated on the basis of the number of encounter points with other traffic participants on a path from the current location of the vehicle 1 to the target stopping location candidate, based on the point of view that the risk of contact or collision increases with respect to a greater number of encounter points between the vehicle 1 and other traffic participants. For example, 10 points at a time are added for each increase of one encounter point, so that there are 10 points in the case of one encounter point, 20 points in the case of two encounter points... and 50 points in the case of five encounter points.

The number of encounter points can be ascertained on the basis of map information and external information acquired by the external sensor 21, for example. In the present embodiment, in the case in which the path of the vehicle 1 cuts across a driving lane, the number of encounter points are counted by determining that there is a possibility of encountering other vehicles, regardless of the presence or absence of actual vehicles. Also, in the case in which the path of the vehicle 1 cuts across a pedestrian crossing, the number of encounter points are counted by determining that there is a possibility of encountering pedestrians, regardless of the presence or absence of pedestrians. That is, a maximum number of encounter points are counted on the basis of the path of the vehicle 1 and the road conditions acquired from the vehicle location information according to the GNSS or other positioning means 24 and map information in the map information database 23.

The points Rf2 related to predicted travel distance are calculated on the basis of a predicted travel distance from the current location of the vehicle 1 to the target stopping location candidate, based on the point of view that the risk of contact or collision increases with respect to a longer distance until the vehicle 1 stops. For example, 0.5 points are added every time the predicted travel distance increases by 10 meters, so that there are 0.5 points in the case in which the predicted travel distance is 10 meters, 1 point in the case of 20 meters ... and 2.5 points in the case of 50 meters. The predicted travel distance can be estimated on the basis of the vehicle location and map information about the surroundings, for example.

The points Rf3 related to predicted travel time are calculated on the basis of a predicted travel time from the current location of the vehicle 1 to the target stopping location candidate, based on the point of view that the risk of contact or collision increase with respect to a longer time until the vehicle 1 stops. For example, 1 point is added every time the predicted travel time increases by 10 seconds, so that there is 1 point in the case in which the predicted travel time is 10 seconds, 2 points in the case of 20 seconds ... and 5 points in the case of 50 seconds. The predicted travel time, although not limited to the following, is calculated by assuming that the RMF is activated while the vehicle 1 is traveling at a vehicle speed of 40 km/h, so that the vehicle is decelerated to 10 km/h at deceleration of 4.0 m/s², travels at a constant speed, and then is decelerated gradually (for example, at deceleration of 1.96 m/s²) immediately before reaching the target stopping location candidate, so as to stop at the target stopping location candidate, for example.

Note that the specific values of the points Rf1 related to the number of encounter points, the points Rf2 related to the predicted travel distance, and the points Rf3 related to the predicted travel time described above are examples, and the use of values other than the above is obviously possible. However, it is preferable to apply a weighting such that the weights increase in the order of the points Rf1 related to the number of encounter points, the points Rf3 related to the predicted travel time, and the points Rf2 related to the predicted travel distance. This is in consideration of the risk being higher when there is a greater number of encounter points at which there is a possibility of encountering other traffic participants, furthermore, the risk being thought to increase more with respect to a longer travel time until stopping at the target stopping location than the case of a longer travel distance, and so on.

Also, in the case in which the risk factors of a plurality of target stopping location candidates have the same value, the target stopping location S is selected such that the direction of travel to the target stopping location candidate is preferentially in the order of the direction going straight through the intersection, the direction in which the vehicle 1 turns at the intersection without cutting across the oncoming lane, and the direction in which the vehicle 1 turns at the intersection by cutting across the oncoming lane.

The RMF part 12 compares the risk factors RF calculated for the plurality of target stopping location candidates, and selects the target stopping location candidate with the smallest risk factor RF as the target stopping location S.

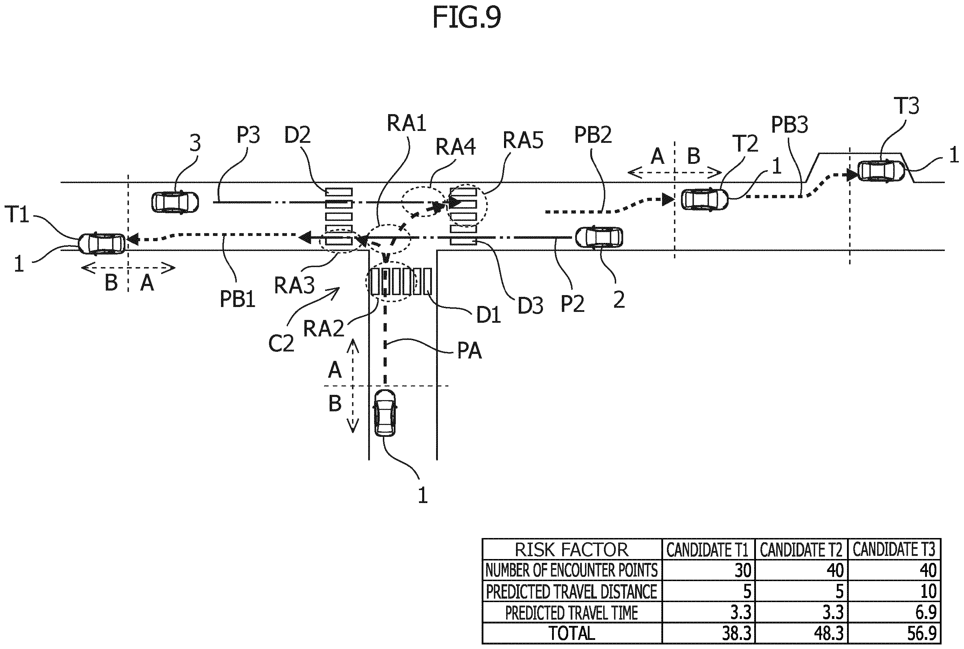

Figure 9 will be referenced to describe the selection of the target stopping location S for an intersection C2 which is a T-junction with no traffic signal. In the example illustrated in Figure 9, around the intersection C2, in addition to the vehicle 1 in front of the intersection C2, there may be present a straight-through vehicle 2 on the right and a straight-through vehicle 3 on the left. Pedestrian crossings are provided on the road ahead and the intersecting road as seen from the vehicle 1, and there may be present a pedestrian attempting to cross a pedestrian crossing D1 in front of the intersection, a pedestrian attempting to cross a pedestrian crossing D2 on the left-turn side, and a pedestrian attempting to cross a pedestrian crossing D3 on the right-turn side. A target path PA planned by the automated operation device 10 of the vehicle 1 is a path PA that makes a left turn or a right turn at the intersection C2. As illustrated in Figure 9, the RMF part 12 sets a target stopping location candidate T1 in a stoppable zone B on a path making a left turn at the intersection C2, sets a target stopping location candidate T2 in a stoppable zone B on a path making a right turn at the intersection C2, and sets a target stopping location candidate T3 in a parking space farther ahead of the target stopping location candidate T2.

For the target stopping location candidate T1, the number of encounter points is three, that is, an encounter point with the straight-through vehicle 2 on the right in a risk area RA1, an encounter point with the pedestrian attempting to cross the pedestrian crossing D1 in a risk area RA2, and an encounter point with the pedestrian attempting to cross the pedestrian crossing D2 in a risk area RA3, and the points related to the number of encounter points are Rf1 = 30. Assuming that the predicted travel distance is 100 meters and the predicted travel time is 33 seconds from the current location of the vehicle 1 to the target stopping location candidate T1, the points related to the predicted travel distance are Rf2 = 5 and the points related to the predicted travel time are Rf3 = 3.3. In this case, the risk factor RF of the target stopping location candidate T1 is 38.3 (= Rf1 + Rf2 + Rf3).

For the target stopping location candidate T2, the number of encounter points is four, that is, an encounter point with the straight-through vehicle 2 on the right in the risk area RA1, an encounter point with the straight-through vehicle 3 on the left in a risk area RA4, an encounter point with the pedestrian attempting to cross the pedestrian crossing D1 in the risk area RA2, and an encounter point with the pedestrian attempting to cross the pedestrian crossing D3 in a risk area RA5, and the points related to the number of encounter points are Rf1 = 40. Assuming that the predicted travel distance is 100 meters and the predicted travel time is 33 seconds from the current location of the vehicle 1 to the target stopping location candidate T2, the points related to the predicted travel distance are Rf2 = 5 and the points related to the predicted travel time are Rf3 = 3.3. In this case, the risk factor RF of the target stopping location candidate T2 is 48.3 (= Rf1 + Rf2 + Rf3).

For the target stopping location candidate T3, similarly to the target stopping location candidate T2, the number of encounter points are four, that is, the encounter point with the straight-through vehicle 2 on the right, the encounter point with the straight-through vehicle 3 on the left, and the encounter points with the pedestrians attempting to cross the pedestrian crossings D1 and D3, respectively, and the points related to the number of encounter points are Rf1 = 40. Assuming that the predicted travel distance is 200 meters and the predicted travel time is 69 seconds from the current location of the vehicle 1 to the target stopping location candidate T3, the points related to the predicted travel distance are Rf2 = 10 and the points related to the predicted travel time are Rf3 = 6.9. In this case, the risk factor RF of the target stopping location candidate T3 is 56.9 (= Rf1 + Rf2 + Rf3).

The RMF part 12 compares the risk factors RF calculated for each of the plurality of target stopping location candidates T1, T2, and T3, and selects the target stopping location candidate T1 on the left-turn path with the smallest risk factor RF as the target stopping location S.

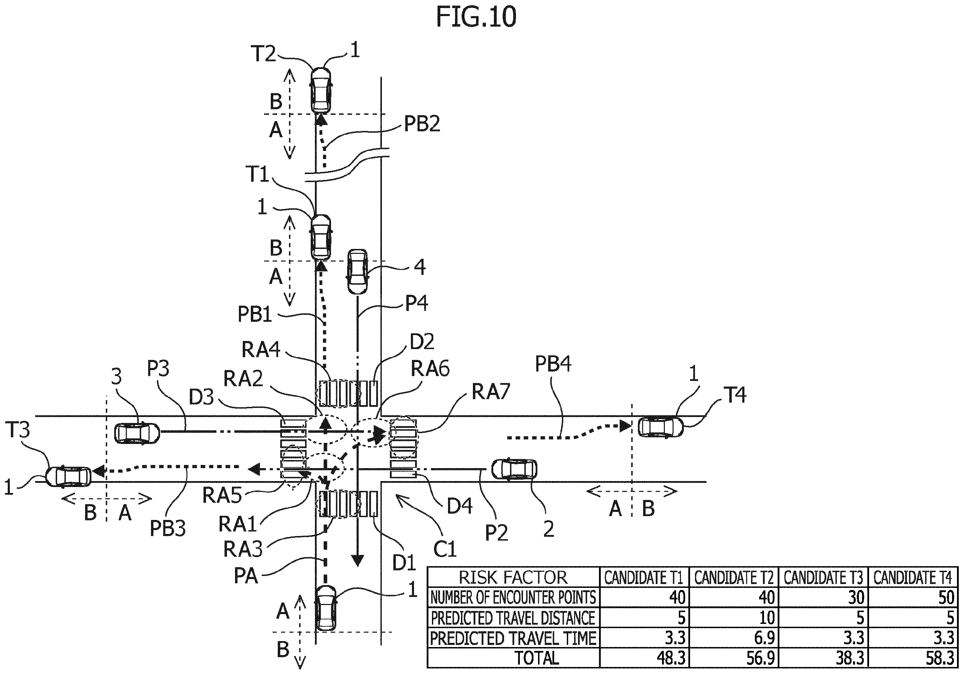

Next, reference will be made to Figure 10 to describe the selection of the target stopping location S for an intersection C1 which is a crossroads with no traffic signal. In the example illustrated in Figure 10, around the intersection C1, in addition to the vehicle 1 in front of the intersection C1, there may be present a straight-through vehicle 2 on the right, a straight-through vehicle 3 on the left, and an oncoming straight-through vehicle 4. Pedestrian crossings are provided on the road going straight through the intersection C1 and the intersecting road as seen from the vehicle 1, and there may be present a pedestrian attempting to cross a pedestrian crossing D1 in front of the intersection, a pedestrian attempting to cross a pedestrian crossing D2 on the far side of the intersection, a pedestrian attempting to cross a pedestrian crossing D3 on the left-turn side, and a pedestrian attempting to cross a pedestrian crossing D4 on the right-turn side. A target path PA planned by the automated operation device 10 of the vehicle 1 is a path PA that goes straight through, makes a left turn, or makes a right turn at the intersection C1.

As illustrated in Figure 10, the RMF part 12 sets a target stopping location candidate T1 in a stoppable zone B on a path going straight through the intersection C1 and sets a target stopping location candidate T2 in a stoppable zone B farther ahead of the target stopping location candidate T1. Also, a target stopping location candidate T3 is set in a stoppable zone B on a path making a left turn at the intersection C1 and a target stopping location candidate T4 is set in a stoppable zone B on a path making a right turn at the intersection C1.

For the target stopping location candidate T1, the number of encounter points is four, that is, an encounter point with the straight-through vehicle 2 on the right in a risk area RA1, an encounter point with the straight-through vehicle 3 on the left in a risk area RA2, an encounter point with the pedestrian attempting to cross the pedestrian crossing D1 in a risk area RA3, and an encounter point with the pedestrian attempting to cross the pedestrian crossing D2 in a risk area RA4. Consequently, the points related to the number of encounter points are Rf1 = 40. Assuming that the predicted travel distance is 100 meters and the predicted travel time is 33 seconds from the current location of the vehicle 1 to the target stopping location candidate T1, the points related to the predicted travel distance are Rf2 = 5 and the points related to the predicted travel time are Rf3 = 3.3. In this case, the risk factor RF of the target stopping location candidate T1 is 48.3 (= Rf1 + Rf2 + Rf3).

For the target stopping location candidate T2, similarly to the target stopping location candidate T1, the number of encounter points are four, that is, the encounter point with the straight-through vehicle 2 on the right, the encounter point with the straight-through vehicle 3 on the left, and the encounter points with the pedestrians attempting to cross the pedestrian crossings D1 and D2, respectively. Consequently, the points related to the number of encounter points are Rf1 = 40. Assuming that the predicted travel distance is 200 meters and the predicted travel time is 69 seconds from the current location of the vehicle 1 to the target stopping location candidate T2, the points related to the predicted travel distance are Rf2 = 10 and the points related to the predicted travel time are Rf3 = 6.9. In this case, the risk factor RF of the target stopping location candidate T2 is 56.9 (= Rf1 + Rf2 + Rf3).

For the target stopping location candidate T3, the number of encounter points is three, that is, an encounter point with the straight-through vehicle 2 on the right in the risk area RA1, an encounter point with a pedestrian attempting to cross the pedestrian crossing D1 in the risk area RA3, and an encounter point with the pedestrian attempting to cross the pedestrian crossing D3 in a risk area RA5, and the points related to the number of encounter points are Rf1 = 30. Assuming that the predicted travel distance is 100 meters and the predicted travel time is 33 seconds from the current location of the vehicle 1 to the target stopping location candidate T3, the points related to the predicted travel distance are Rf2 = 5 and the points related to the predicted travel time are Rf3 = 3.3. In this case, the risk factor RF of the target stopping location candidate T3 is 38.3 (= Rf1 + Rf2 + Rf3).

For the target stopping location candidate T4, the number of encounter points is five, that is, an encounter point with the straight-through vehicle 2 on the right in the risk area RA1, encounter points with the straight-through vehicle 3 on the left and the oncoming straight-through vehicle 4 in a risk area RA6, an encounter point with the pedestrian attempting to cross the pedestrian crossing D1 in the risk area RA3, and an encounter point with the pedestrian attempting to cross the pedestrian crossing D4 in a risk area RA7, and the points related to the number of encounter points are Rf1 = 50. Assuming that the predicted travel distance is 100 meters and the predicted travel time is 33 seconds from the current location of the vehicle 1 to the target stopping location candidate T4, the points related to the predicted travel distance are Rf2 = 5 and the points related to the predicted travel time are Rf3 = 3.3. In this case, the risk factor RF of the target stopping location candidate T4 is 58.3 (= Rf1 + Rf2 + Rf3).

The RMF part 12 compares the risk factors RF calculated for each of the plurality of target stopping location candidates T1 to T4 and selects the target stopping location candidate T3 on the left-turn path with the smallest risk factor RF as the target stopping location S.

### RMF activation flow during automated driving

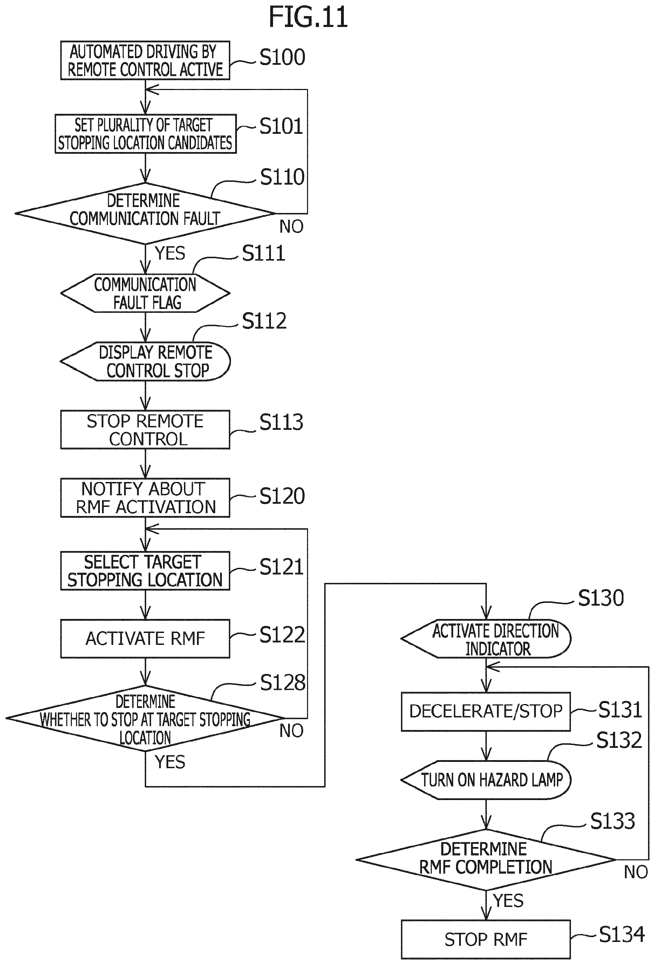

Next, the flow of RMF activation in conditions under which remote monitoring and control during automated driving has become difficult will be described. Figure 11 illustrates a flowchart explaining the flow of RMF activation according to the present embodiment.

### (1) Automated driving by remote monitoring and control activation (step S100)

Automated driving by the automated operation device 10 is performed according to a departure command from the operator of the remote-control base station 25R. The automated operation device 10 performs driving control of the vehicle 1 in accordance with a generated target path and a target vehicle speed.

### (2) Setting of plurality of target stopping location candidates (step S101)

The RMF part 12 performs a search for target stopping location candidates on the basis of vehicle location information from the positioning means 24 and map information in the map information database 23, and sets a plurality of target stopping location candidates partway along the global path to the destination in preparation for RMF activation. During automated driving, the RMF part 12 sets a plurality of target stopping location candidates continuously (for example, at prescribed intervals) and not only in the vicinity of an intersection. The plurality of target stopping location candidates are updated continuously so that the most recent target stopping location candidates based on the current location of the vehicle 1 are set.

### (3) Communication fault determination (step S110)

While the automated operation device 10 by remote monitoring and control is active, the RMF part 12 continuously (for example, at prescribed intervals) determines whether or not communication with the remote-control base station 25R via the communicator 25 is being performed normally and the continuation of automated driving is possible. If conditions are determined in which the continuation of remote monitoring and control of automated driving by the automated operation device 10 has become difficult due to a communication fault, such as a malfunction in the communicator 25 or an interruption in communication with the remote-control base station 25R, the flow proceeds to step S111 for activating the RMF. On the other hand, in the case in which a communication fault has not occurred and the continuation of remote monitoring and control is possible, the flow returns to step S101 and continues automated driving.

### (4) Stopping of remote monitoring and control (steps S111 to S113)

When it is determined that the continuation of remote monitoring and control has become difficult, a communication fault occurrence flag is raised (step S111), and at the same time, the notification part 17 notifies the inside and outside of the vehicle about the stopping of the activation (automated driving) of the automated operation device 10 by remote monitoring and control (step S 112), and the activation of the automated operation device 10 by remote monitoring and control is stopped.

### (5) RMF activation notification (step S120)

The passengers or occupants of the vehicle 1 are notified by the notification part 17 that the RMF is to be activated because of conditions in which the continuation of remote monitoring and control has become difficult. The outside of the vehicle may also be notified by the notification part 17.

### (6) Target stopping location selection (step S121)

A target stopping location S is selected from among the plurality of target stopping location candidates. The RMF part 12 calculates the risk factor RF as described above for each of the plurality of target stopping location candidates set in step S101, and selects the target stopping location candidate with the lowest risk factor RF as the target stopping location S. The path generating part 13 generates a target path for RMF activation to the selected target stopping location S on the basis of vehicle location information, map information, lane marking positions of the neighboring lanes, the positions and speeds of other vehicles, the state of movement of the vehicle, and the like acquired by the environmental condition estimating part 11.

### (7) RMF activation (step S122)

The activation of the RMF for safely stopping the vehicle 1 inside a target stopping area is started. The RMF is a function causing the vehicle 1 to drive autonomously so as to decelerate and stop at a target stopping location S in accordance with a target path for RMF activation.

### (8) Determination of whether to stop at target stopping location S (step S128)

The RMF part 12 detects the presence or absence of an obstacle around the target stopping location S on the basis of obstacle information around the target stopping location S provided from the external sensor 21 through the environmental condition estimating part 11, and determines whether the vehicle can stop at the target stopping location S. In the case in which there is no obstacle around the target stopping location S, the target stopping location is determined to be accessible for stopping and the flow proceeds to step S130.

On the other hand, for example, in the case in which another vehicle is present at the target stopping location S or construction is underway near the target stopping location S, it is determined that the vehicle 1 cannot stop at the target stopping location S due to an obstacle around the target stopping location S. In this case, the flow returns to step S121 to select a new target stopping location S.

### (9) Deceleration and stopping by RMF (steps S130 to S132)

The automated operation device 10 activates a direction indicator (not illustrated) in the direction of the target stopping location S (step S130). The vehicle control part 14 performs speed control and steering control to drive the vehicle 1 so as to decelerate in accordance with the target path for RMF activation and to stop at the target stopping location S (step S131). The automated operation device 10 causes hazard lamps (not illustrated) to blink (step S132).

### (10) RMF completion determination (steps S133 and S134)

The RMF part 12 matches the location at which the vehicle 1 has stopped with the target stopping location S on the basis of vehicle location information and map information, and determines whether the two are in agreement. If they are not in agreement, the flow returns to step S131 to drive to the target stopping location S. In the case in which the stopped location of the vehicle 1 and the target stopping location S are in agreement, RMF completion is determined, and the flow proceeds to step S134 to terminate the RMF. With this, the sequence of RMF processes ends.

In the driving control apparatus of the vehicle 1 according to the present embodiment described above, operation and effects like the following can be exhibited.

The driving control apparatus of the vehicle 1 provided with the automated operation device 10 for executing automated driving by remote monitoring and control has a risk mitigation function (RMF) that executes risk mitigation control for stopping the vehicle at a target stopping location in the case of conditions in which the continuation of remote monitoring and control has become difficult. The automated operation device 10 is configured to execute a search for target stopping location candidates on the basis of location information about the vehicle 1 and map information during automated driving in preparation for the RMF activation, and in the case in which the RMF is activated in the vicinity of an intersection, to calculate the risk factor RF expressing how high a risk is for the vehicle 1 to reach the target stopping location candidate from the current location for each of a plurality of target stopping location candidates including a target stopping location candidate located on a path different from the target path PA of the automated driving, and to select, as the target stopping location S, a target stopping location candidate with the lowest risk factor RF from among the plurality of target stopping location candidates.

Since the search for a plurality of target stopping location candidates is executed in advance during automated driving, when the activation of the RMF is started, the target stopping location S can be selected rapidly. In the case in which the RMF is activated in the vicinity of an intersection, by comparing the risk factors RF of each of the target stopping location candidates, the target stopping location with the lowest risk factor can be selected, and the risk of inducing a disturbance in the traffic flow or contact or collision with other traffic participants can be minimized.

The risk factor RF is calculated as the total of the points Rf1 related to the number of encounter points between the vehicle 1 and other traffic participants at the intersection and near the intersection, the points Rf3 related to the predicted travel time from the current location of the vehicle 1 to the target stopping location candidate, and the points Rf2 related to the predicted travel distance from the current location of the vehicle 1 to the target stopping location candidate. With regard to the number of encounter points, the possibility of contact or collision is lower as the number of encounter points at which there is a possibility of encountering other traffic participants decreases. Regarding the predicted travel time, the shorter the movement time to the target stopping location candidate is, the more travel can be shortened under conditions in which the continuation of remote monitoring and control is difficult. Regarding the predicted travel distance, the shorter the movement distance to the target stopping location candidate is, the more travel can be shortened under conditions in which the continuation of remote monitoring and control is difficult. Consequently, an appropriate target stopping location can be determined from points of view such as reducing encounter points with other traffic participants when passing through an intersection and reducing the travel time or travel distance to the target stopping location. Note that in the present embodiment, since the number of encounter points is counted from vehicle location information according to the GNSS or other positioning means 24 and the road structure based on map information in the map information database 23, regardless of whether or not other traffic participants are actually present, it is also possible to attain a reduction in the processing load on the RMF part 12.

The risk factor RF is calculated by applying a weighting such that the weights increase in the order of the points Rf1 related to the number of encounter points, the points Rf3 related to the predicted travel time, and the points Rf2 related to the predicted travel distance. For example, cases are anticipated in which, despite the distance being short, the required time to the target stopping location is lengthy due to external influences such as traffic restrictions by road shoulder construction, and therefore, the weighting of the predicted travel time is greater than the predicted travel distance.

In the case in which the risk factors RF of a plurality of target stopping location candidates each have the same value, the target stopping location S is selected such that the direction of travel to the target stopping location candidate is preferentially in the order of the direction going straight through the intersection, the direction in which the vehicle 1 turns at the intersection without cutting across the oncoming lane, and the direction in which the vehicle 1 turns at the intersection by cutting across the oncoming lane. In the case in which the target stopping location S is set in the straight-through direction, the presence or absence of an obstacle around the target stopping location S can be detected rapidly by the external sensor 21 to determine whether or not the target stopping location is accessible for stopping, and therefore a target stopping location candidate in the straight-through direction is selected preferentially. With regard to the direction (for example, the left-turn direction) in which the vehicle 1 turns at the intersection without cutting across the oncoming lane and the direction (for example, the right-turn direction) in which the vehicle 1 turns at the intersection by cutting across the oncoming lane, the left-turn direction has no encounter point with the oncoming straight-through vehicle 4 and is considered to be of lower risk than the right-turn direction.

At the intersection and near the intersection, a no-stop area A to be excluded from the search for target stopping location candidates is set. Since an area of high risk near the intersection is designed to be set as a no-stop area A and the target stopping location S is arranged not to be set in the no-stop area A, encounter points with other traffic participants can be cleared at least partially, and the risk of inducing contact or collision with other traffic participants can be reduced.

### Modifications

(1) In the embodiment described above, a plurality of target stopping location candidates are searched for continuously in preparation for RMF activation, and the target stopping location S is selected from among the plurality of target stopping location candidates. Situations in which there is an obstacle around the target stopping location S so that the target stopping location is not accessible for stopping may be anticipated, and therefore a greater number of target stopping location candidates is preferable. From the point of view of the processing load on the RMF part 12, the number of target stopping location candidates may be arranged to be at least two places, and in the case in which the selected target stopping location S is not accessible for stopping, target stopping location candidates located on the same path may be arranged to be added.
(2) In the embodiment described above, the determination of the target stopping location S in the case in which the RMF is activated in the vicinity of an intersection is described. However, the determination method for the target stopping location S according to the embodiment described above is not limited to the vicinity of an intersection and can also be applied to conditions that necessitate lane changing or travel path changing by the activation of the RMF, such as roadways with many lanes.
(3) In the embodiment described above, the risk factor RF is calculated as the total of the points Rf1 related to the number of encounter points, the points Rf2 related to the predicted travel distance, and the points Rf3 related to the predicted travel time. However, the risk factor RF is not limited thereto and may also be calculated using at least one of the points Rf1 related to the number of encounter points, the points Rf2 related to the predicted travel distance, and the points Rf3 related to the predicted travel time. Moreover, the risk factor RF may also be arranged to be calculated on the basis of a factor other than the number of encounter points, the predicted travel distance, and the predicted travel time.
(4) In the embodiment described above, left-hand traffic is described as an example of the traffic rules, but the present embodiment is also applicable to the case of right-hand traffic. In the case of right-hand traffic, the direction of making a right turn at an intersection is the direction of turning without cutting across the oncoming lane, and the direction of making a left turn at an intersection is the direction of turning by cutting across the oncoming lane.

Although several embodiments of the present invention have been described above, it is noted that the present invention is not limited to the above embodiments, and various further modifications and alterations are possible within the scope of the present invention.

### [Reference Signs List]

- 1: Vehicle
- 10: Automated operation device
- 11: Environmental condition estimating part
- 12: RMF part
- 13: Path generating part
- 14: Vehicle control part
- 15: ACC controller
- 16: Automated steering controller
- 17: Notification part
- 21: External sensor
- 22: Internal sensor
- 23: Map information database
- 24: Positioning means (GNSS)
- 25: Communicator
- 31: EPS controller
- 32: Engine controller
- 33: ESP/ABS controller
- 34: Manual steering (wheel)
- 35: Manual control (accelerator pedal)
- 36: Manual control (brake pedal)

## Claims

1. A driving control apparatus for a vehicle (1), the driving control apparatus comprising an automated operation device (10) for executing automated driving by remote monitoring and control, having
a risk mitigation function that executes risk mitigation control for stopping the vehicle (1) at a target stopping location (S) in a case of communication fault with a remote-control base station for remote monitoring and control, wherein
the automated operation device (10) is configured:
to generate a target path of the automated driving to a final destination on the basis of location information about the vehicle (1) and map information;
**characterized in that** the autonomous operation device (10) is further configured:
to execute a search for target stopping location candidates on the basis of location information about the vehicle (1) and map information during the automated driving along the target path in preparation for activation of the risk mitigation function;
in a case in which the risk mitigation function is activated in the vicinity of an intersection, to calculate a risk factor (RF) expressing how high a risk is for the vehicle (1) to reach a target stopping location candidate from a current location for each of a plurality of target stopping location candidates (T1, T2, T3, T4) including a target stopping location candidate located on a path different from the target path of the automated driving; and
to select, as the target stopping location (S), a target stopping location candidate with a lowest risk factor (RF) from among the plurality of target stopping location candidates.

2. The driving control apparatus for a vehicle (1) according to claim 1, wherein
the risk factor (RF) is calculated as a total of points (Rf1) related to a number of encounter points between the vehicle (1) and other traffic participants at the intersection and near the intersection, points (Rf3) related to a predicted travel time from the current location of the vehicle (1) to the target stopping location candidate, and points (Rf2) related to a predicted travel distance from the current location of the vehicle (1) to the target stopping location candidate.

3. The driving control apparatus for a vehicle (1) according to claim 2, wherein
the risk factor (RF) is calculated by applying a weighting such that weights increase in the order of the points (Rf1) related to the number of encounter points, the points (Rf3) related to the predicted travel time, and the points (Rf2) related to the predicted travel distance.

4. The driving control apparatus for a vehicle (1) according to any one of claims 1 to 3, wherein
in a case in which the risk factors (RF) of the plurality of target stopping location candidates each have the same value, the target stopping location (S) is selected such that a direction of travel to the target stopping location candidate is in the order of a direction going straight through the intersection, a direction in which the vehicle (1) turns at the intersection without cutting across an oncoming lane, and a direction in which the vehicle (1) turns at the intersection by cutting across the oncoming lane.

5. The driving control apparatus for a vehicle (1) according to any one of claims 1 to 4, wherein
at the intersection and near the intersection, a no-stop area (A) to be excluded from the search for target stopping location candidates is set.

## Patentansprüche

1. Fahrsteuerungsvorrichtung für ein Fahrzeug (1), wobei die Fahrsteuerungsvorrichtung eine automatisierte Bedienungsvorrichtung (10) zum Ausführen des automatisierten Fahrens durch Fernüberwachung und -steuerung umfasst, Folgendes aufweisend:
eine Risikominderungsfunktion, die eine Risikominderungssteuerung zum Anhalten des Fahrzeugs (1) an einem Zielanhalteort (S) in einem Fall eines Kommunikationsfehlers mit einer Fernsteuerungsbasisstation für Fernüberwachung und -steuerung ausführt, wobei
die automatisierte Bedienungsvorrichtung (10) konfiguriert ist, um:
einen Zielpfad des automatisierten Fahrens zu einem Endziel auf Basis von Ortsinformationen über das Fahrzeug (1) und Karteninformationen zu erzeugen;
**dadurch gekennzeichnet, dass** die autonome Bedienungsvorrichtung (10) ferner konfiguriert ist, um:
während des automatisierten Fahrens entlang des Zielpfads als Vorbereitung auf die Aktivierung der Risikominderungsfunktion eine Suche nach Zielanhalteort-Kandidaten auf Basis von Ortsinformationen über das Fahrzeug (1) und Karteninformationen auszuführen;
in einem Fall, in dem die Risikominderungsfunktion in der Nähe einer Kreuzung aktiviert wird, einen Risikofaktor (RF) zu berechnen, der ausdrückt, wie hoch ein Risiko für das Fahrzeug (1) ist, einen Zielanhalteort-Kandidaten von einem aktuellen Ort für jeden von einer Vielzahl von Zielanhalteort-Kandidaten (T1, T2, T3, T4) zu erreichen, einschließlich eines Zielanhalteort-Kandidaten, der sich auf einem Pfad befindet, der von dem Zielpfad des automatisierten Fahrens verschieden ist; und
als Zielanhalteort (S) einen Zielanhalteort-Kandidaten mit dem niedrigsten Risikofaktor (RF) aus der Vielzahl der Zielanhalteort-Kandidaten auszuwählen.

2. Fahrsteuerungsvorrichtung für ein Fahrzeug (1) nach Anspruch 1, wobei
der Risikofaktor (RF) als Summe von Punkten (Rf1), die sich auf eine Anzahl von Begegnungspunkten zwischen dem Fahrzeug (1) und anderen Verkehrsteilnehmern an der Kreuzung und in der Nähe der Kreuzung beziehen, Punkten (Rf3), die sich auf eine prognostizierte Fahrzeit von dem aktuellen Ort des Fahrzeugs (1) zu dem Zielanhalteort-Kandidaten beziehen, und Punkten (Rf2), die sich auf eine prognostizierte Fahrstrecke von dem aktuellen Ort des Fahrzeugs (1) zu dem Zielanhalteort-Kandidaten beziehen, berechnet wird.

3. Fahrsteuerungsvorrichtung für ein Fahrzeug (1) nach Anspruch 2, wobei
der Risikofaktor (RF) durch Anwenden einer Gewichtung berechnet wird, bei der die Gewichte in der Reihenfolge der Punkte (Rf1), die sich auf die Anzahl der Begegnungspunkte beziehen, der Punkte (Rf3), die sich auf die prognostizierte Fahrzeit beziehen, und der Punkte (Rf2), die sich auf die prognostizierte Fahrstrecke beziehen, zunehmen.

4. Fahrsteuerungsvorrichtung für ein Fahrzeug (1) nach einem der Ansprüche 1 bis 3, wobei
in einem Fall, in dem die Risikofaktoren (RF) der Vielzahl von Zielanhalteort-Kandidaten jeweils den gleichen Wert haben, der Zielanhalteort (S) so ausgewählt wird, dass eine Fahrtrichtung zu dem Zielanhalteort-Kandidaten in der Reihenfolge einer Richtung, die gerade durch die Kreuzung geht, einer Richtung, in der das Fahrzeug (1) an der Kreuzung abbiegt, ohne eine Gegenfahrspur zu schneiden, und einer Richtung, in der das Fahrzeug (1) an der Kreuzung abbiegt, indem es die Gegenfahrspur schneidet, liegt.

5. Fahrsteuerungsvorrichtung für ein Fahrzeug (1) nach einem der Ansprüche 1 bis 4, wobei
an der Kreuzung und in der Nähe der Kreuzung ein Nicht-Anhalte-Bereich (A) festgelegt wird, der von der Suche nach Zielanhalteort-Kandidaten ausgeschlossen wird.

## Revendications

1. Appareil de commande de conduite pour un véhicule (1), l'appareil de contrôle de la conduite comprend un dispositif de fonctionnement automatisé (10) pour exécuter une conduite automatisée par surveillance et commande à distance, présentant une fonction d'atténuation des risques qui exécute une commande d'atténuation des risques pour arrêter le véhicule (1) au niveau d'un emplacement d'arrêt cible (S) en cas de défaut de communication avec une station de base de commande à distance pour la surveillance et la commande à distance, dans lequel le dispositif de fonctionnement automatisé (10) est configuré :
pour générer un chemin cible de la conduite automatisée vers une destination finale sur la base d'informations de localisation sur le véhicule (1) et d'informations cartographiques ;
**caractérisé en ce que** le dispositif de fonctionnement autonome (10) est également configuré :
pour exécuter une recherche de candidats d'emplacement d'arrêt cible sur la base d'informations d'emplacement du véhicule (1) et d'informations cartographiques pendant la conduite automatisée le long du chemin cible en préparation de l'activation de la fonction d'atténuation des risques ;
dans un cas où la fonction d'atténuation des risques est activée à proximité d'une intersection, pour calculer un facteur de risque (RF) exprimant le niveau de risque pour le véhicule (1) d'atteindre un candidat d'emplacement d'arrêt cible à partir d'un emplacement actuel pour chacun d'une pluralité des candidats d'emplacements d'arrêt cible (T1, T2, T3, T4) comprenant un candidat d'emplacement d'arrêt cible situé sur un chemin différent du chemin cible de la conduite automatisée ; et
pour sélectionner, comme emplacement d'arrêt cible (S), un emplacement d'arrêt cible candidat avec un facteur de risque (RF) le plus faible parmi la pluralité d'emplacements d'arrêt cibles candidats.

2. Appareil de commande de conduite pour un véhicule (1) selon la revendication 1, dans lequel :
le facteur de risque (RF) est calculé comme un total de points (Rf1) liés à un certain nombre de points de rencontre entre le véhicule (1) et d'autres participants à la circulation à l'intersection et à proximité de l'intersection, de points (Rf3) liés à un temps de trajet prévu depuis l'emplacement actuel du véhicule (1) jusqu'au candidat d'emplacement d'arrêt cible, et de points (Rf2) liés à une distance de trajet prévue depuis l'emplacement actuel du véhicule (1) jusqu'au candidat d'emplacement d'arrêt cible.

3. Appareil de commande de conduite pour un véhicule (1) selon la revendication 2, dans lequel
le facteur de risque (FR) est calculé en appliquant une pondération telle que les coefficients de pondération augmentent dans l'ordre des points (Rf1) liés au nombre de points de rencontre, des points (Rf3) liés au temps de trajet prévu et des points (Rf2) liés à la distance de trajet prévue.

4. Appareil de commande de conduite pour un véhicule (1) selon l'une quelconque des revendications 1 à 3, dans lequel
dans un cas où les facteurs de risque (RF) de la pluralité de candidats d'emplacement d'arrêt cible ont chacun la même valeur, l'emplacement d'arrêt cible (S) est sélectionné de telle sorte qu'une direction de déplacement vers le candidate d'emplacement d'arrêt cible soit dans l'ordre d'une direction allant tout droit à travers l'intersection, une direction dans laquelle le véhicule (1) tourne à l'intersection sans couper une voie venant en sens inverse, et une direction dans laquelle le véhicule (1) tourne à l'intersection en coupant la voie venant en sens inverse.

5. Appareil de commande de conduite pour un véhicule (1) selon l'une quelconque des revendications 1 à 4, dans lequel
à l'intersection et à proximité de l'intersection, une zone sans arrêt (A) à exclure de la recherche des candidats d'emplacement d'arrêt cible est définie.
